# FASCICULE DE BREVET EUROPEEN

(11) **EP 1 695 299 B1**
(45) Date de publication et mention de la délivrance du brevet: **14.03.2018**
(21) Numéro de dépôt: 04805660.0
(22) Date de dépôt: 08.12.2004
(51) Int. Cl.: G07F 7/10

(54) **PROCEDE DE SECURISATION D UNE CARTE PERSONNELLE DE DONNEES, CARTE PERSONNELLE DE DONNEES ET ETUI POUR CARTE PERSONNELLE.**
VERFAHREN ZUR SICHERUNG EINER PERSÖNLICHEN DATENKARTE, PERSÖNLICHE DATENKARTE UND HÜLLE FÜR EINE PERSÖNLICHE KARTE
METHOD FOR SECURING A PERSONAL DATA CARD, PERSONAL DATA CARD AND CASE FOR A PERSONAL CARD

(30) Priorité: 19.12.2003 FR 0314975
(43) Date de publication de la demande: 30.08.2006
(73) Titulaire: Idemia Identity & Security France, 92130 Issy-les-Moulineaux (FR)
(72) Inventeur: FONDEUR, Jean-Christophe, F-92300 Levallois (FR); GUILLEMOT, Florence, F-78510 Triel sur Seine (FR); MONTEILLIET, Gilles, F-95450 Us (FR)
(74) Mandataire: Lavialle, Bruno François Stéphane
(86) Numéro de dépôt international: PCT/FR2004/003152
(87) Numéro de publication internationale: WO 2005/066905

(56) Documents cités:
- EP-A- 0 994 439
- EP-A- 1 291 825
- EP-A- 1 326 196
- WO-A-03/022945
- WO-A1-03/052680
- DE-C1- 19 618 144
- GB-A- 2 320 180
- PT-A- 102 102
- US-A- 4 701 959
- US-A- 4 950 877
- US-A- 5 417 328
- US-A- 5 458 713
- US-A1- 2002 030 581
- US-A1- 2003 179 455
- PATENT ABSTRACTS OF JAPAN vol. 1997, no. 10, 31 octobre 1997 (1997-10-31) & JP 09 156241 A (FUJI PHOTO FILM CO LTD), 17 juin 1997 (1997-06-17)
- PATENT ABSTRACTS OF JAPAN vol. 1995, no. 11, 26 décembre 1995 (1995-12-26) & JP 07 220039 A (SHIBAURA ENG WORKS CO LTD), 18 août 1995 (1995-08-18)
- PATENT ABSTRACTS OF JAPAN vol. 0180, no. 42 (P-1680), 21 janvier 1994 (1994-01-21) & JP 05 266475 A (CSK CORP), 15 octobre 1993 (1993-10-15)
- PATENT ABSTRACTS OF JAPAN vol. 2000, no. 24, 11 mai 2001 (2001-05-11) & JP 2001 205182 A (NISSHIN STEEL CO LTD), 31 juillet 2001 (2001-07-31)
- PATENT ABSTRACTS OF JAPAN vol. 2003, no. 12, 5 décembre 2003 (2003-12-05) & JP 2003 298697 A (CANON INC), 17 octobre 2003 (2003-10-17)
- PATENT ABSTRACTS OF JAPAN vol. 1997, no. 09, 30 septembre 1997 (1997-09-30) & JP 09 136068 A (SHIYACHIHATA KOGYO KK; TOUMEI SERVICE:KK), 27 mai 1997 (1997-05-27)

## Description

La présente invention concerne la sécurisation d'une carte personnelle de données comportant un moyen de mémorisation de caractéristiques d'au moins une empreinte digitale d'un utilisateur de la carte.

### ARRIERE PLAN DE L'INVENTION

Il est connu des dispositifs de contrôle d'accès et d'identité notamment comportant, d'une part, un lecteur de cartes dans lequel un individu désirant satisfaire au contrôle doit introduire une carte de données comportant un moyen de mémorisation de caractéristiques d'une de ses empreintes digitales et, d'autre part, un capteur contre lequel l'individu doit appliquer le doigt correspondant à l'empreinte digitale dont les caractéristiques sont mémorisées. Le contrôle est effectué en comparant les caractéristiques de l'empreinte digitale détectée aux caractéristiques stockées dans le moyen de mémorisation de la carte. Ce type de contrôle est fiable et particulièrement sûr, le taux d'erreurs étant minime dans les opérations de reconnaissance d'empreintes digitales.
Plusieurs systèmes de contrôle des empreintes digitales sont connus: voir par exemple les documents PT 102102 B, DE 196 18 144 C1, EP 0 994 439 A2, EP 1 326 196 A1, EP 1 291 825 A1 et US 2002/0030581 A1.

Il existe des systèmes et/ou étuis de nettoyage de la bande magnétique d'une carte: voir par exemple les documents US 5,417,328; US 4,950,877 et GB 2 320 180 A. Toutefois, il existe un risque qu'un fraudeur venant en possession d'une carte perdue ou volée puisse détecter des empreintes digitales laissées sur la carte par le propriétaire de celle-ci lors de manipulations de la carte et reconstituer une empreinte digitale complète sur un faux doigt utilisable pour satisfaire au contrôle.

### OBJET DE L'INVENTION

Un but de l'invention est de fournir un moyen permettant d'éliminer ce risque.

### BREVE DESCRIPTION DE L'INVENTION

A cet effet, on prévoit, selon l'invention, une carte personnelle de données comportant un élément de mémorisation de caractéristiques d'au moins une empreinte digitale d'un utilisateur de la carte, la carte comprenant un moyen d'altération d'empreintes digitales déposées sur la carte lors de manipulations de celle-ci.

Ainsi, la carte incorpore le moyen d'altération de sorte que la sécurisation ne nécessite pas l'utilisation d'un autre élément.

Selon l'invention, le moyen d'altération comprend une succession de reliefs présents sur au moins une face de la carte.

Lorsqu'un utilisateur manipule la carte, ses doigts ne sont en contact qu'avec une partie des reliefs, de sorte que les empreintes digitales laissées présentent un caractère discontinu. Un fraudeur ne dispose alors pas d'une empreinte complète qui lui permettrait de réaliser un faux doigt présentant toutes les caractéristiques mémorisées. Selon l'invention, ladite face de la carte est granuleuse.

La granularité de la face de la carte permet, d'une part, d'empêcher le dépôt d'une empreinte complète sur cette face de la carte et, d'autre part, de diminuer le contraste entre la face de la carte et celle de l'empreinte déposée. Ce faible contraste rend difficile la révélation de l'empreinte et son utilisation ultérieure pour réaliser un faux doigt. Des solutions (exemples), autres que l'invention, pourraient être utilisées pour éliminer le risque de reconstituer une empreinte digitale complète. Selon un premier exemple, le moyen d'altération comprend un revêtement externe présentant des propriétés d'altération des empreintes digitales.

Ainsi, le revêtement peut être un revêtement anti-adhérent. Les empreintes digitales ne sont alors pas ou peu retenues par la face de la carte et, si certaines adhèrent malgré tout, le moindre frottement provoque leur élimination. Le revêtement peut également présenter en surface des propriétés physico-chimiques favorisant l'étalement des empreintes digitales sur cette surface. Un deuxième exemple comprend un étui pour carte personnelle de données, comprenant un moyen d'altération d'empreintes digitales déposées sur la carte lors de manipulations de celle-ci.

Selon une première variante de ce deuxième exemple, l'étui comprend une ouverture d'introduction de la carte dans l'étui et un organe de frottement s'étendant dans l'ouverture pour être en contact contre une face de la carte.

Ainsi, la face de la carte est essuyée lors de son introduction dans l'étui et/ou de son extraction hors de l'étui. Ceci permet d'éliminer par frottement les empreintes digitales déposées sur la carte.

Selon une deuxième variante de ce deuxième exemple, le moyen d'altération comprend un organe de diffusion dans l'étui d'un produit chimique d'altération des empreintes.

Le produit chimique d'altération des empreintes est par exemple un produit qui :
- décompose les empreintes, les empreintes digitales étant alors décomposées lors du séjour de la carte dans son étui, ou
- forme à la surface de la carte une couche anti-adhérente, les empreintes digitales n'étant alors pas ou peu retenues par la face de la carte et, si certaines adhèrent malgré tout, le moindre frottement provoque leur élimination, ou
- forme une couche présentant en surface des propriétés physico-chimiques favorisant l'étalement des empreintes digitales sur cette surface.

Selon une troisième variante de ce deuxième exemple, l'étui comprend une ouverture d'introduction de la carte dans l'étui et le moyen d'altération comprend un tampon qui s'étend dans l'ouverture pour être en contact contre une face de la carte et qui est imbibé d'un produit chimique d'altération des empreintes.

Ainsi, le produit chimique d'altération est déposé sur la face de la carte lors de son introduction dans l'étui et/ou de son extraction hors de l'étui.

D'autres caractéristiques et avantages de l'invention ressortiront à la lecture de la description qui suit de modes de mise en oeuvre particuliers non limitatifs de l'invention.

### BREVE DESCRIPTION DES DESSINS

Il sera fait référence aux dessins annexés, parmi lesquels :
- la figure 1 est une vue en perspective d'une carte conforme à un premier mode de réalisation de l'invention,
- la figure 2 est une vue agrandie d'une zone de cette carte,
- la figure 3 est une vue en perspective d'un étui conforme à la première variante du deuxième exemple et d'une carte conforme au premier exemple,
- la figure 4 est une vue en coupe transversale d'un étui conforme à la deuxième variante du deuxième exemple,
- la figure 5 est une vue en perspective d'un étui conforme à la troisième variante du deuxième exemple.

### DESCRIPTION DETAILLEE DE L'INVENTION

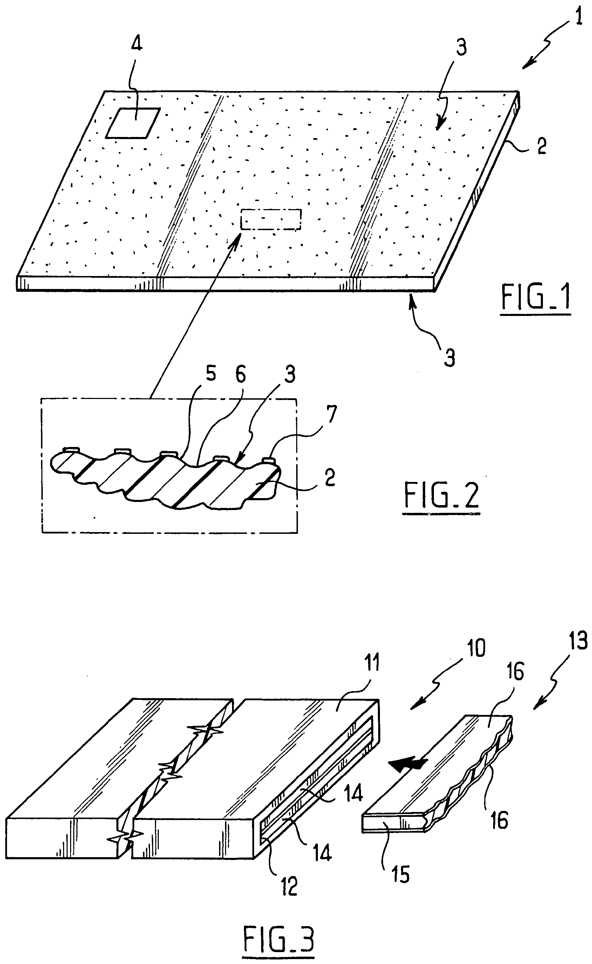

En référence aux figures 1 et 2, la carte conforme à l'invention, généralement désignée en 1, comprend de façon connue en elle-même un corps 2 en matière plastique présentant deux faces 3 opposées et un circuit intégré 4 enchâssé dans le corps 2.

Dans le circuit intégré 4 sont mémorisées des caractéristiques d'au moins une empreinte digitale de l'utilisateur de la carte.

Conformément à l'invention, les faces 3 sont granuleuses : elles présentent une succession de reliefs en saillie 5 et en creux 6.

Lorsque l'utilisateur manipule la carte 1 ses doigts sont principalement en contact avec les reliefs en saillie 5 de sorte qu'il ne dépose des empreintes digitales 7 que sur ces reliefs. L'empreinte digitale 7 est alors discontinue ou fragmentée de sorte qu'elle ne comporte pas toutes les caractéristiques nécessaires à sa reconnaissance et mémorisées dans le circuit intégré 4.

Du fait de leur granularité, les faces 3 présentent un faible contraste avec les empreintes digitales déposées, ce qui rend plus difficile leur révélation.

En référence à la figure 3, l'étui selon la première variante du deuxième exemple, généralement désigné en 10, comprend un boîtier 11 de forme ici sensiblement parallélépipédique, délimitant un logement présentant une ouverture 12 latérale pour l'introduction d'une carte 13 parallèlement à ses faces.

L'ouverture 12 est bordée d'organes de frottement 14 qui délimitent entre eux une fente de largeur légèrement inférieure à l'épaisseur de la carte 13. Les organes de frottement 14 sont de préférence élastiquement déformables et sont par exemple en élastomère éventuellement recouvert d'un tissu de type « microfibre ».

La carte 13 conforme au premier exemple, comporte un corps 15 en matière plastique portant un circuit intégré non visible sur la figure.

Le corps 2 a des faces recouvertes d'un revêtement anti-adhérent ici en polytétrafluoroéthylène (PTFE) dont la surface supérieure forme les faces 16 externes de la carte 13. Ce revêtement limite la retenue des empreintes digitales.

Lorsque la carte 13 est introduite dans l'ouverture 12, elle provoque une déformation des organes de frottement 14 qui laissent passer la carte mais frottent contre ses faces 16. Ce frottement élimine les empreintes digitales qui serait restées sur les faces 16 de la carte 13.

Les organes de frottement 14 étant disposés dans l'ouverture, ils frottent sur la totalité des faces 16 de la carte 13.

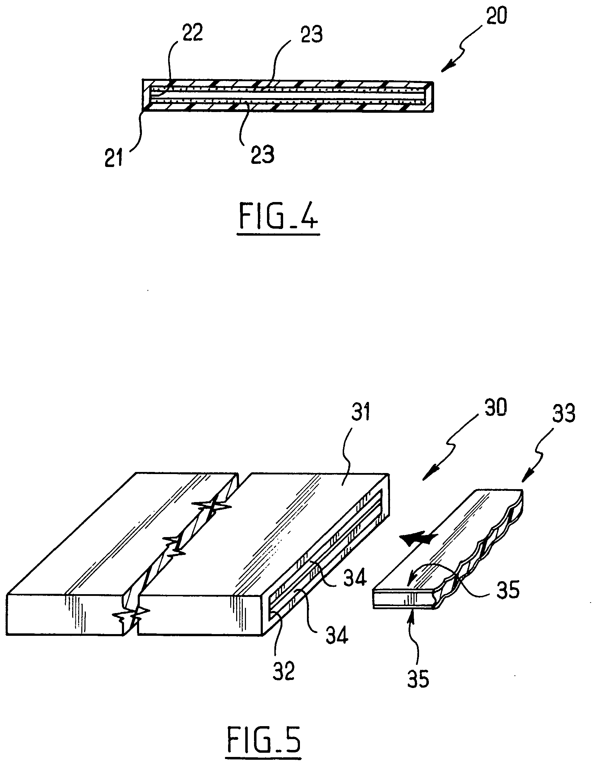

En référence à la figure 4, et selon la deuxième variante de l'étui du deuxième exemple, l'étui 20 comporte un boîtier 21 définissant un logement 22 pour la carte et présentant une ouverture (non représentée aux figures) pour l'introduction de la carte dans le logement.

Le logement 22 comprend des faces sur lesquelles sont disposées des éléments de diffusion 23 en matières imprégnées d'un produit chimique de décomposition des empreintes.

Lorsque la carte est reçue dans le logement 22, le produit chimique se diffuse dans le logement 22 et élimine les empreintes portées par la carte.

En référence à la figure 5, l'étui selon la troisième variante du deuxième exemple, généralement désigné en 30, comprend un boîtier 31 de forme ici sensiblement parallélépipédique, délimitant un logement présentant une ouverture 32 latérale pour l'introduction d'une carte 33 parallèlement à ses faces.

L'ouverture 32 est bordée de tampons 34 qui délimitent entre eux une fente de largeur légèrement inférieure à l'épaisseur de la carte 33. Les tampons 34 sont déformables et sont imbibés d'un produit chimique d'altération des empreintes. Le produit chimique d'altération des empreintes est par exemple un produit qui :
- décompose les empreintes, les empreintes digitales étant alors décomposées lors du séjour de la carte dans son étui, ou
- forme à la surface de la carte une couche anti-adhérente, les empreintes digitales n'étant alors pas ou peu retenues par la face de la carte et, si certaines adhèrent malgré tout, le moindre frottement provoque leur élimination, ou
- forme à la surface de la carte une couche présentant en surface des propriétés physico-chimiques favorisant l'étalement des empreintes digitales sur cette surface.

Lorsque la carte 33 est introduite dans l'ouverture 32, elle a ses faces 35 en contact avec les tampons 34 qui frottent contre les faces 35. Les tampons 34 étant disposés dans l'ouverture, ils frottent sur la totalité des faces 35 de la carte 33.

Le produit chimique d'altération des empreintes est par exemple un produit qui :
- décompose les empreintes, les empreintes digitales étant alors décomposées lors du séjour de la carte 33 dans son étui 30, ou
- forme aux surfaces 35 de la carte 33 une couche anti-adhérente, les empreintes digitales n'étant alors pas ou peu retenues par la face de la carte et, si certaines adhèrent malgré tout, le moindre frottement provoquant leur élimination, ou
- forme aux surfaces 35 de la carte 33 une couche présentant en surface des propriétés physico-chimiques (en particulier une énergie et une tension de surface) favorisant l'étalement des empreintes digitales sur cette surface.

On peut prévoir d'imbiber périodiquement les tampons 34 avec le produit chimique. L'étui 30 peut par exemple comprendre à cette fin un réservoir de produit chimique dont un ajutage débouche sur les tampons 34.

Bien entendu, l'invention n'est pas limitée au mode de réalisation décrit et on peut y apporter des variantes de réalisation sans sortir du cadre de l'invention tel que défini par les revendications.

Les caractéristiques de l'empreinte digitale peuvent être enregistrées dans d'autres moyens de mémorisation qu'un circuit intégré, comme par exemple une piste magnétique, un code barre...

Les reliefs des faces de la carte peuvent être obtenus par un autre moyen que la granularité et par exemple par des rainures agencées sur ces faces. Ces rainures peuvent être rectilignes et parallèles, en quadrillage, circulaires et concentriques...

La carte 13 et l'étui 10 peuvent être utilisés indépendamment l'un de l'autre. En particulier, l'étui 10 est utilisable avec des cartes dépourvues de revêtement anti-adhérent.

## Revendications

1. Carte personnelle de données (1) comportant un circuit intégré (4) contentant des caractéristiques d'au moins une empreinte digitale d'un utilisateur de la carte, **caractérisée en ce que** la carte comprend une succession de reliefs (5, 6) présents sur au moins une face (3) de la carte (1) pour former un moyen d'altération (5, 6) automatique d'empreintes digitales déposées sur la carte lors de manipulations de celle-ci, ladite face (3) de la carte étant granuleuse.

## Patentansprüche

1. Persönliche Datenkarte (1), umfassend einen integrierten Schaltkreis (4), der Merkmale mindestens eines Fingerabdrucks eines Nutzers der Karte enthält, **dadurch gekennzeichnet, dass** die Karte eine Folge von Erhebungen (5, 6) umfasst, die auf mindestens einer Seite (3) der Karte (1) vorhanden sind, um ein Mittel (5, 6) zur automatischen Veränderung von Fingerabdrücken zu bilden, die während Handhabungen derselben auf die Karte aufgebracht werden, wobei die Seite (3) der Karte körnig ist.

## Claims

1. Personal data card (1) including an integrated circuit (4) containing characteristics of at least one fingerprint of a user of the card, **characterized in that** the card includes a succession of raised portions (5, 6) on at least one face (3) of the card (1) to form a means (5, 6) for automatic spoiling of fingerprints deposited on the card when manipulating it, said face (3) of the card being granular.
